# NEUE EUROPÄISCHE PATENTSCHRIFT

(11) **EP 1 133 012 B2**
(45) Veröffentlichungstag und Bekanntmachung des Hinweises auf die Entscheidung über den Einspruch: **30.11.2016**
(45) Hinweis auf die Patenterteilung: 04.06.2003
(21) Anmeldenummer: 01102297.7
(22) Anmeldetag: 01.02.2001
(51) Int. Cl.: H01R 13/115, H01R 13/504, H01R 43/24, H02K 5/22

(54) **Steckbarer Klemmenkasten**
Pluggable terminal box
Boîtier de bornes enfichable

(30) Priorität: 08.02.2000 DE 10005505
(43) Veröffentlichungstag der Anmeldung: 12.09.2001
(73) Patentinhaber: GRUNDFOS A/S, DK-8850 Bjerringbro (DK)
(72) Erfinder: Mikkelsen, Steen, 8850 Bjerringbro (DK)
(74) Vertreter: Vollmann, Heiko

(56) Entgegenhaltungen:
- EP-A- 0 428 749
- EP-A- 0 877 451
- DE-A- 2 264 146
- DE-A1- 19 851 455
- DE-U- 9 315 914

## Beschreibung

Die Erfindung geht aus von einem steckbaren Klemmenkasten zum elektrischen Anschluss an einen für eine Heizungspumpe bestimmten Elektromotor, gemäß dem Oberbegriff des Patenatanspruchs 1.

Ein Klemmenkasten dieser Art ist in dem DE-Gebrauchsmuster 93 15 914 beschrieben. Er umfaßt ein Bodenteil und einen Deckel sowie in diesem Kasten untergebrachte Steuerteile, Funktionsteile und Anschlußklemmen zur Steuerung eines insbesondere für Heizungspumpen vorgesehenen Elektromotors. Der Klemmenkasten ist über eine angegossene Steckleiste, welche von den Anschlußklemmen durchragt wird, in die Steckaufnahme des Elektromotors einsteckbar, um dessen Stator elektrisch anzuschließen. In dem gegossenen Bodenteil des Klemmenkastens werden die Anschlußklemmen nachträglich, d. h. nach dem Gießen des Bodenteils, formschlüßig fixiert und mit den Steurerteilen elektrisch verbunden. Wenigstens einige der Steuerteile werden anderersetis mit einem Netzkabel verschaltet, in dem die Adern des Kabels mit den entsprechenden Steuerteilen elektrisch verbunden werden. Das nachträgliche Einstecken und Fixieren der einzelnen Anschlußklemmen an den dafür vorgesehenen, formschlüssigen Befestigungsausbildungen des gegossenen Bodenteiles des Klemmenkastens ist umständlich und zeitraubend und verteuert die Herstellung eines montagefertigen Klemmenkastens in der Masssenproduktuin beträchtlich. Außerdem kann durch die Steckkleiste des Bodenteils Feuchtigkeit in den Klemmenkasten eindringen, wodurch die Funktion der elektrischen Steuerteile in dem Kasten beeinträchtigt werden kann.

Die Aufgabe der Erfindung besteht in der Verbesserung eines steckbaren Klemmenkastens der einleitend angeführten Art dahingehend, dass wenigstens diejenigen Anschlußklemmen des Klemmenkastens, die die spätere Steckverbindung mit dem Elektromotor schaffen, kostengünstiger als bisher und sicher abgedichtet in dem Bodenteil des Klemmenkastens fixiert sind.

Die Lösung dieser Aufgabe ist in dem Patentanspruch 1 angegeben.

Nach dieser Lösung sind die Anschlußklemmen in Form von Steckkontaktteilen erheblich kostengünstiger fixiert, da sie beim Geißvorgang für das Bodenteil gleichzeitig in diesem Bodenteil mit eingegossen werden. Die Gießform für das Bodenteil ist für das Festhalten der Steckkontaktteile darin während des Gießens entsprechend vorbereitet, so dass die Steckkontaktteile beim Spritzgießen des flüssigen Gießmaterials in die Gießform lagesicher in ihrem vorbestimmten Abschnitt unmittelbar in dem Gießmaterial eingebettet werden. Somit sind die teckkontaktteile bei Entnahme des erstarrten Bodenteils aus der Gießform bereits in dem Bodenteil in vorbestimmter Position angeordnet. Außerdem sind die Steckkontaktteile durch ihr Eingießen feuchtigkeitsdicht umschlossen, so dass an diesen Stellen keine Feuchtigkeit in den Klemmkasten eindringen kann.

Eine vorteilhafte Weiterbildung des erfindungsgemäßen Klemmenkastens besteht darin, dass das Bodenteil in seinem unterseitigen Steckbereich eine aussenseitige, mitgegossene Steckleiste aufweist, in welche äußere Abschnitte der Steckkontaktteile im wesentlichen eingegossen sind. Hierdurch sind auch die äußeren Abschnitte der Steckkontaktteile unmittelbar in dem Gießmaterial für das Bodenteil eingegossen und dadurch gegen Verbiegen oder anderweitige Beschädigung gesichert.

Erfindungsgemäß weist das Bodenteil eine innenseitige, mitgegossene Stabilisierungsleiste auf, in welcher der innere Abschnitt der Steckkontaktteile im wesentlichen eingegossen ist. Somit sind die Steckkontaktteile auch im Innenraum des Bodenteils während des Zusammensetzens des Klemmenkastens insbesondere gegen Verbiegen gesichert.

In noch weiterer vorteilhafter Ausbildung des Klemmenkastens weist das Bodenteil zum elektrischen Anschluß des Klemmenkastens an ein Versorgungsstromnetz einen weiteren Steckbereich mit zusätzlichen Steckkontaktteilen auf, die alle einerseits in der Seitenwand dieses Steckbereiches eingegossen sind und andererseits zum Anschließen eines Steckelementes eines Netzkabels aus der Seitenwand nach außen herausragen. Eines dieser zusätzlichen Steckkontaktteile kann ein Erdungselement sein. Hierdurch entfällt beim Herstellen eines einsatzfertigen Klemmenkastens das einzelne Anschließen der Adern eines Netzkabels an den entsprechenden elektrischen Kontaktstellen im Inneren des Klemmenkastens. Um den Klemmenkasten mit Strom zu versorgen, ist es lediglich notwendig, das Steckelement eine Netzkabels an diesem weiteren Steckbereich des Klemmenkastens anzustecken. Dies braucht erst dann zu erfolgen, wenn der erfindungsgemäße Klemmenkasten am Einsatzort des Elektromotors auf diesen aufgesteckt worden ist.

Weitere Vorteile des erfindungsgemäßen Klemmenkastens ergeben sich aus den Merkmalen der entsprechenden Unteransprüche.

Die Erfindung ist nachstehend anhand eines in den anliegenden Zeichnungen dargestellten Ausführungsbeispieles näher erläutert. Es zeigen:
- Fig. 1: eine auseinandergezogene Perspektivansicht des Ausführungsbeispiels,
- Fig.2: eine Perspektivansicht von bestimmungsgemäß geformten und positionierten Kontaktteilen, die jedoch noch nicht eingegossen sind,
- Fig. 3: eine Perspektivansicht des Bodenteils des Klemmenkastens, wobei die Kontaktteile in dem Bodenteil unmittelbar eingegossen sind,
- Fig. 4: einen Querschnitt durch das Bodenteil mit eingegossenen Steckkontaktteilen nach der Linie IV - IV in Fig. 3.

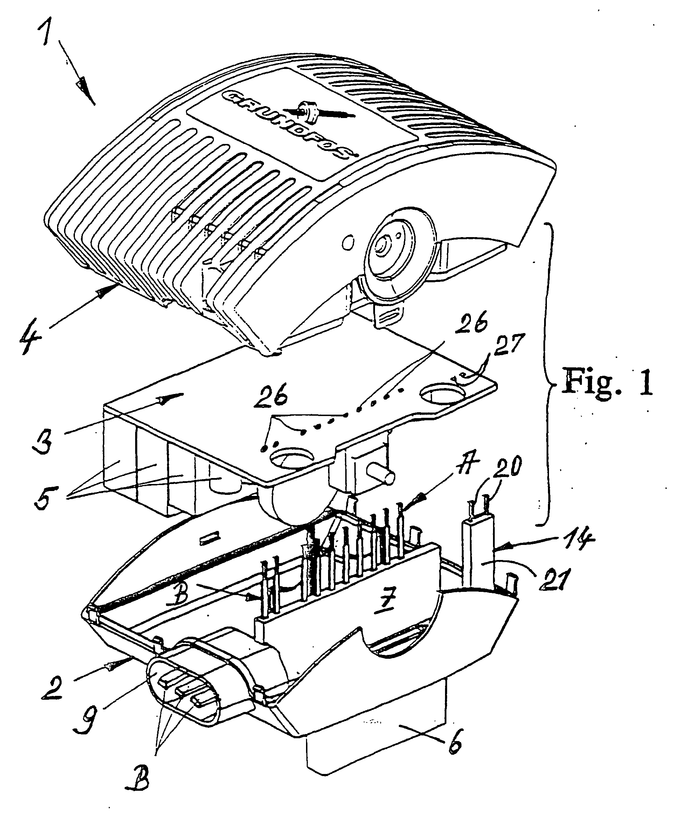

Fig. 1 zeigt einen allgemeinen mit 1 bezeichneten Klemmenkasten, der ein Bodenteil 2, eine Leiterplatte 3 und einen Schutzdeckel 4 umfaßt. Die Leiterplatte 3 enthält in bekannter Weise verschiedene elektrische und elektronische Steuer- und Funktionsteile 5 zur Steuerung eines (nicht dargestellten) Elektromotors. Die bestückte Leiterplatte 3 wird in das fertige Bodenteil 2 eingesetzt, wonach der Schutzdeckel 4 mit dem Bodenteil durch Kraftformschluß oder durch Schraubverbindung verbunden wird. Das Bodenteil 2 weist auf seiner Motorseite eine Steckleiste 6 auf, mit welcher der Klemmenkasten 1 auf den Elektromotor aufgesteckt wird, der hierzu in bekannter Weise eine Steckaufnahme aufweist, um den Stator des Motors elektrisch anzuschließen. Der Elektromotor wird zum Antrieb einer (nicht gezeigten) Heizungspumpe verwendet.

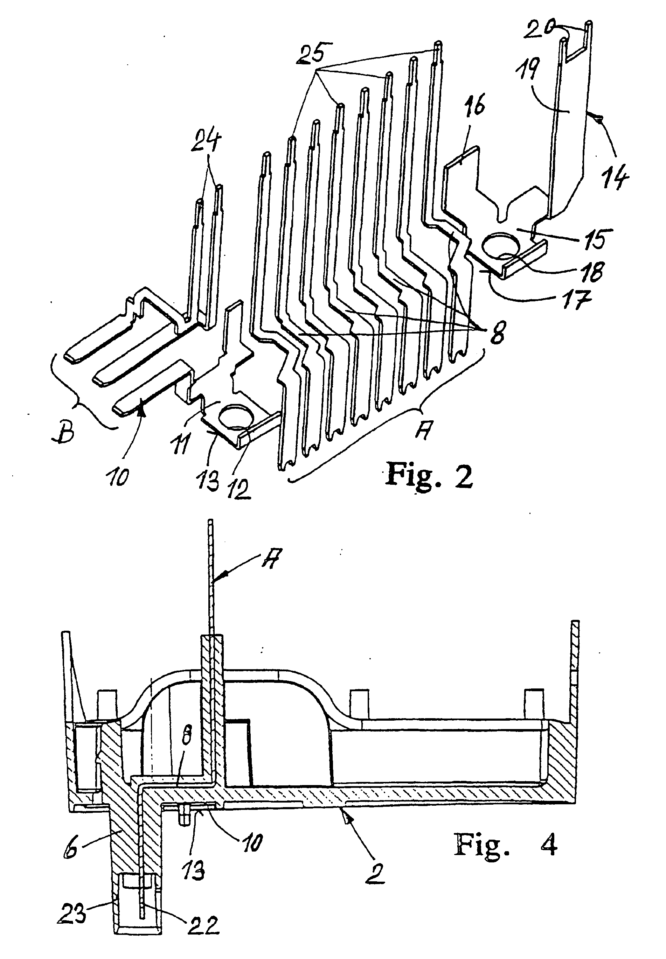

Das aus Kunststoff bestehende Bodenteil 2 weist wenigstens einen Satz A Steckkontaktteile auf, die Anschlußklemmen bilden sowie einerseits mit der Leiterplatte 3 in elektrischen Kontakt stehen und sich andererseits bis in die Steckleiste 6 erstrecken, in welcher ihre Enden zur Ausführung der Steckverbindung mit dem Elektromotor frei ausmünden (Fig. 4).

Des weiteren weist das Bodenteil 2 eine innenseitige Stabilisierungsleiste 7 auf, in welcher die Steckkontaktteile A mit ihrem inneren Abschnitt im wesentlichen eingebettet und so gegen Verbiegen geschützt sind.

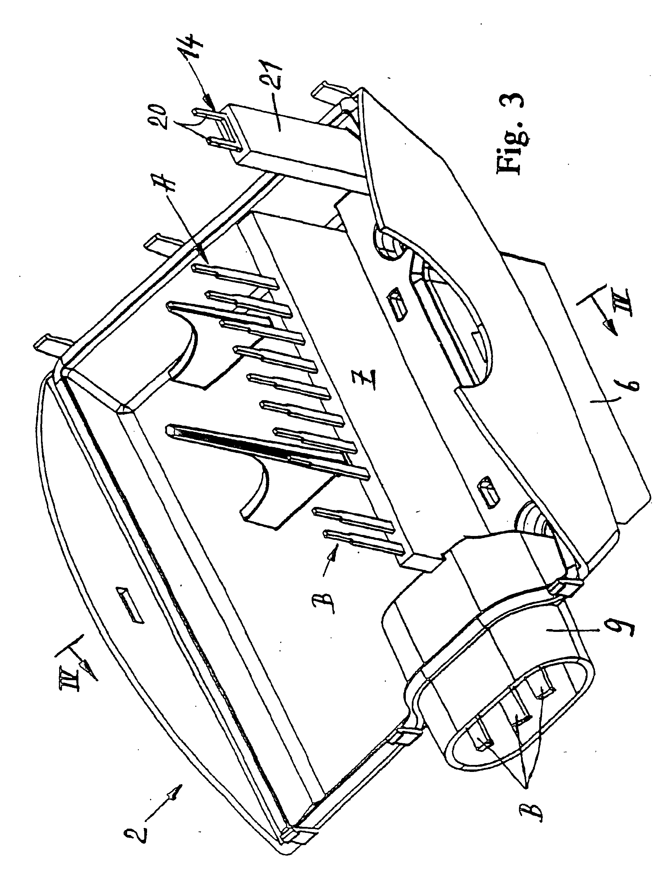

In Fig 2 ist das Bodenteil 2 als solches nicht dargestellt, um die Formgebung aller Steckkontaktteile und sonstigen Kontaktteile, wie sie im Bodenteil eingegossen sind, besser erkennen zu können. In Verbindung mit den in Fig. 3 und 4 ist klar, wie die Lage und der Verlauf sämtlicher Kontakteile in dem gegossenen Bodenteil 2 ist.

Aus Fig. 2 ist zu ersehen, wie die Steckkontaktteile A geformt sind und später in dem Bodenteil 2 lagemäßig positioniert gehalten werden. In Fig. 2 sind neben den Steckkontaktteilen A auch andere, weiter untern erläuterte Kontaktteile in ihrer Formgebung und späteren ortsfesten Positionierung in dem Bodenteil gezeigt.

Das Bodenteil 2 besteht aus Kunststoff und wird durch Spritzgießen hergestellt. Die Spritgießform für das Bodenteil ist jedoch so ausgebildet, dass die Steckkontaktteile A und die anderen in Fig. 2 gezeigten Kontaktteile vor dem Spritzgießen in die Gießform in bestimmungsgemäßer Position gehalten werden. In die mit allen Steckkontaktteilen A und den anderen Kontaktteilen versehene gießbereite Gießform wird das flüssige Gießmaterial aus Kunststoff eingespritzt, wodurch sich in der Gießform die Körperform des Bodenteils 2 ausbildet und wodurch gleichzeitig alle Steckkontaktteile A und die anderen Kontaktteile sowie sonstigen Teile gemäß Fig. 2 in dem Bodenteil unmittelbar eingegossen sind. Dabei sind die Steckkontaktteile A in dem Bodenteil 2 mindestens mit ihrem Mitteleabschnitt 8 unmittelbar eingegossen. Wie bereits erwähnt, weist das Bodenteil eine äußere Steckleiste 6 und eine innere Stabilisierungsleiste 7 für die Steckkontaktteile A auf. Diese beiden Leisten werden ebenfalls beim Gießen des Bodenteils mitgegossen, so dass die entsprechenden Abschnitte der Steckkontaktteile A ebenfalls unmittelbar in diesen Leisten eingegossen sind.

Es ist auch möglich, die Steckkontaktteile A aus einer Platine derart auszustanzen, dass randseitig zunächst wenigstens ein metallener Haltestreifen für die Kontaktteile bestehen bliebt, wonach eine Biegeformgebung der gestanzten Steckkontaktteile erfolgen kann. Vorteilhaft im Mittelbereich der Kontaktteile wird dann eine gemeinsame Halteleiste aus Kunststoff angegossen, die alle Kontaktteile zueinander vorpositioniert zusammenhält. Danach wird der metallene Haltestreifen abgestanzt, so dass ein vorgefertigtes Steckkontaktgebilde erhalten wird. Dieses Gebilde wird dann alternativ in die Gießform für das Bodenteil eingesetzt. Danach erfolgt das Eingießen der so vorpositionierten Steckkontaktteile A in dem Bodenteil durch Gießen desselben, wodurch die Steckkontaktteile mittelbar in dem Bodenteil eingegossen sind.

Wie es am besten aus Fig. 2 zu erkennen ist, ist ein zusätzlicher Satz B Steckkontaktteile für das Bodenteil 2 vorgesehen. Diese ebenfalls beim Gießen des Bodenteils darin unmittelbar eingegossenen Steckkontaktteile dienen zur Stromversorgung der Steuerteile 5 und anderer Funktionsteile der Leiterplatte 3 über ein Netzkabel, das ein Steckelement, z. B. eine Kupplung aufweist, das bzw. die auf die Steckkontaktteile B aufgesteckt wird. Hierzu besitzt das Bodenteil eine angegossene Schutzhülse 9, in welche die im Bodenteil eingegossenen Steckkotakteile B hineinragen, wie es aus den Fig. 1 und 3 ersichtlich ist. Die Schutzhülse 9 mit den Steckkontaktteilen B bildet somit eine weiteren Steckbereich des Klemmenkastens. Falls gewünscht, können die Steckkontaktteile B ebenfalls mittelbar in dem Bodenteil eingegossen sein, also mit Hilfe einer vorgegossenen und vorpositionierenden Halteleiste aus Kunststoff.

Die Fig. 1 und 3 zeigen eindeutig, das auch der zweite Satz B der Steckkontaktteile teilweise in der inneren Stabilisierungsleiste 7 des Bodenteils 2 eingegossen ist.

In Fig. 2 ist gezeigt weiterhin, dass eines der zusätzlichen Steckkontaktteile B ein Erdungselement 10 ist, mit welchem die elektrische Erdung des angeschlossenen Elektromotors bewirkt wird. Dieses Erdungselement weist einen im gegossenen Material des Bodenteils eingegossenen Abschnitt 11 mit einem Loch 12 auf. Der Abschnitt 11 des Erdungselementes ist jedoch so geformt und so in dem Bodenteil eingegossen,

## Patentansprüche

1. Steckbarer Klemmenkasten zum elektrischen Anschluss an einen für eine Heizungspumpe bestimmten Elektromotor, umfassend ein aus Kunststoff bestehendes Bodenteil mit mindestens einem Steckbereich, der elektrische Steckkontaktteile als Anschlussklemmen aufweist, die mit ihrem äußeren Steckabschnitt in elektrische Gegensteckkontaktteile des Elektromotors steckbar sind,
in dem Bodenteil vorgesehene elektrische Steuerteile für die Steuerung des Elektromotors
und einen mit dem Bodenteil verbundenen Schutzdeckel für alle Steuerteile in dem Klemmenkasten,
**dadurch gekennzeichnet,**
**dass** alle Steckkontaktteile (A) des Steckbereiches durch den Vorgang des Gießens des Bodenteils (2) in diesem Bodenteil ortsfest eingebettet sind, wobei das Bodenteil (2) eine innenseitige, mitgegossene Stabilisierungsleiste (7) aufweist, in welcher der innere Abschnitt der Steckkontaktteile (A) teilweise eingegossen ist.

2. Klemmenkasten nach Anspruch 1, **dadurch gekennzeichnet, dass** das Bodenteil (2) in seinem motorseitigen Steckbereich eine aussenseitige, mitgegossene Steckleiste (6) aufweist, in welcher der äußere Abschnitt der Steckkontaktteile (A) teilweise eingegossen ist.

3. Klemmenkasten nach Anspruch 1 oder 2, **dadurch gekennzeichnet, dass** das Bodenteil (2) zum elektrischen Anschluss des Klemmenkastens (1) an ein Versorgungsstromnetz einen weiteren Steckbereich mit zusätzlichen Steckkontaktteilen (B) aufweist, die alle einerseits in der Wand dieses Steckbereiches eingegossen sind und andererseits zum Anschließen eines Steckelementes eines Netzkabels aus dem Bodenteil herausragen.

4. Klemmenkasten nach Anspruch 3, **dadurch gekennzeichnet, dass** eines der zusätzlichen Steckkontaktteile (B) ein Erdungselement (10) ist, das derart in dem Bodenteil (2) eingegossen ist, dass es eine gegenüber der gegossenen Bodenwand des Bodenteils freiliegende Kontaktfläche (13) aufweist, die beim Anbringen des Klemmenkastens (1) an dem Elektromotor mit dessen Gehäuse in leitende Verbindung gelangt.

5. Klemmenkasten nach einem der vorstehenden Ansprüche, **dadurch gekennzeichnet, dass** in der Bodenwand des Bodenteils (2) ein Temperaturfühlelement (14) derart eingegossen ist, dass es einerseits eine gegenüber der gegossenen Bodenwand freiliegende Kontaktfläche (17) aufweist, die beim Anbringen des Klemmenkastens (1) an dem Elektromotor mit dessen Gehäuse in Kontakt kommt, uns sich andererseits in das Innere des Bodenteils (2) erstreckt.

6. Klemmenkasten nach Anspruch 5, **dadurch gekennzeichnet, dass** der sich in das Innere des Bodenteils (2) erstreckende Abschnitt (19) des Temperaturfühlelementes (14) im Wesentlichen in einer mitgegossenen Halterippe (21) eingebettet ist.

7. Klemmenkasten nach einem der Ansprüche 1 bis 4, **dadurch gekennzeichnet, dass** alle aus dem Bodenteil nach außen herausragenden Steckkontaktteile (A, B) jedes Steckbereiches jeweils eine Gruppe bilden und dass die beiden Gruppen je von einer angegossenen Schutzhülse (9, 23) umgeben sind.

8. Klemmenkasten nach einem der vorstehenden Ansprüche, **dadurch gekennzeichnet, dass** die inneren Enden (24, 25, 20) sämtlicher stromleitender Steckkontaktteile (A, B) und des Temperaturfühlelementes (14) in einer Ebene vorgesehen und steckbar ausgebildet sind, dass eine Leiterplatte (3) vorgesehen ist, auf der die elektrischen Steuerteile (5) angeordnet sind und die Löcher (26, 27) zur Aufnahme dieser steckbaren Enden aufweist und dass die darin eingesteckten Enden sämtlicher eingegossenen Steckkontaktteile (A, B) mit der Leiterplatte (3) elektrisch verbunden sind.

9. Klemmenkasten nach einem der Ansprüche 1 bis 7, **dadurch gekennzeichnet, dass** die inneren Enden (24, 25, 20) sämtlicher stromleitender Steckkontaktteile (A, B) und des Temperaturfühlelementes (14) in einer Ebene vorgesehen und steckbar ausgebildet sind, dass eine Leiterplatte (3) vorgesehen ist, auf der die elektrischen Steuerteile (5) angeordnet sind und die Löcher (26, 27) zur Aufnahme dieser steckbaren Enden aufweist und dass die darin eingesteckten Enden sämtlicher eingegossenen Steckkontaktteile (A, B) sowie die elektrischen Steuerteile (5) der Leiterplatte (3) mit der letzteren durch einen einzigen elektrischen Verbindungsvorgang verbunden sind.

## Claims

1. A pluggable terminal box for the electrical connection to an electric motor envisaged for a heating pump,
comprising
a base part consisting of plastic with at least one plug region which comprises electrical plug contact parts as connection terminals which with their outer plug section are pluggable into electrical counter-plug contact parts of the electric motor,
electrical control parts provided in the base part for the control of the electric motor
and a protective lid connected to the base part, for all control parts in the terminal box,
**characterised in**
**that** all plug contact parts (A) of the plug region by way of the procedure of casting the base part (2) are embedded in this base part in a stationary manner, wherin the base part (2) comprises an integrally cast stabilising ledge (7) on the inner side in which the inner section of the plug contact parts (A) is partly cast.

2. A terminal box according to claim 1, **characterised in that** the base part (2) in its plug region on the motor side comprises an integrally cast plug ledge (6) on the outer side, in which the outer section of the plug contact parts (A) are partly cast.

3. A terminal box according to claim 1 or 2, **characterised in that** the base part (2) for the electrical connection of the terminal box (1) to a current supply mains comprises a further plug region with additional plug contact parts (B) which on the one hand are all cast in the wall of this plug region and on the other hand project out of the base part for the connection of a plug element of a mains cable.

4. A terminal box according to claim 3, **characterised in that** one of the additional plug contact parts (B) is an earthing element (10) which is cast into the base part (2) in a manner such that it has a contact surface (13) which lies free with respect to the cast base wall of the base part and which on attaching the terminal box (1) to the electric motor becomes conductingly connected to its housing.

5. A terminal box according to one of the preceding claims, **characterised in that** a temperature sensor element (14) is cast in the base wall of the base part (2) in a manner such that on the one hand it has a contact surface (17) which lies free with respect to the cast base wall and which on attaching the terminal box (1) on the electric motor comes into contact with its housing, and on the other hand extends into the inside of the base part (2).

6. A terminal box according to claim 5, **characterised in that** the section (19) of the temperature sensor element (14) extending into the inside of the base part (2) is essentially embedded in an integrally cast retaining rib (21).

7. A terminal box according to one of the claims 1 to 4, **characterised in that** all plug contact parts (A, B) of each plug region, which project outwards from the base part in each case form a group and that the two groups are in each case surrounded by a cast-on protective sleeve (9, 23).

8. A terminal box according to one of the preceding claims, **characterized in that** the inner ends (24, 25, 20) of all current-conducting plug contact parts (A, B) and of the temperature sensor element (14) are provided in one plane and are designed pluggable, that there is provided a circuit board (3) on which the electrical control parts (5) are arranged and which comprises the holes (26, 27) for accommodating these pluggable ends and that the ends, inserted therein, of all cast plug contact parts (A, B) are electrically connected to the circuit board (3).

9. A terminal box according to one of the claims 1 to 7, **characterized in that** the inner ends (24, 25, 20) of all current-conducting plug contract parts (A, B) and of the temperature sensor element (14) are provided in one plane and are designed pluggable, that there is provided a circuit board (3) on which the electrical control parts (5) are arranged and which comprises the holes (26, 27) for accommodating these pluggable ends and that the ends, inserted therein, of all cast plug contact parts (A, B), as well as the electrical control parts (5) of the circuit board (3) are connected to the latter by a single electrical connecting procedure.

## Revendications

1. Boîtier de connexion enfichable pur le raccordement électrique à un moteur électrique destiné à une pompe de chauffage, comprenant
une partie de fond réalisée en matière plastique et présentant au moins une zone enfichable qui comprend des pièces de contact à fiche électriques en tant que bornes de connexion, qui, avec leur partie de fiche extérieure, peuvent être engagées dans des pièces de contact à fiche électriques conjuguées du moteur électrique,
des composants de commande électriques prévus dans la partie de fond et destinés à la commande du moteur électrique,
et un couvercle de protection relié à la partie de fond et destiné à tous les composants de commande dans le boîtier de connexion, **caractérisé en ce que**
toutes les pièces de contact à fiche (A) de la zone enfichable sont encastrées en position fixe dans la partie de fond, grâce à l'opération de moulage de cette partie de fond (2), dans lequel la partie de fond (2) présente sur le côté intérieur, une barrette de stabilisation (7) venue de moulage, dans laquelle est encastré partiellement, par moulage, le tronçon intérieur des pièces de contact à fiche (A).

2. Boîtier de connexion selon la revendication 1, **caractérisé en ce que** la partie de fond (2), dans sa zone enfichable côté moteur, présente une barrette de connexion enfichable (6) extérieure, venue de moulage, et dans laquelle est encastré partiellement, par moulage, le tronçon extérieur des pièces de contact à fiche (A).

3. Bôitier de connexion selon la revendication 1 ou 2, **caractérisé en ce que** la partie de fond (2), pour le raccordement électrique du boîtier de connexion (1) à un réseau d'alimentation en courant, comporte une autre zone enfichable avec des pièces de contact à fiche supplémentaires (B), qui toutes, d'une part sont encastrées par moulage dans la paroi de cette zone enfichable, et d'autre part font saillie de la partie de fond en vue d'y raccorder un élément de connexion enfichable d'un câble alimentation.

4. Boîtier de connexion selon la revendication 3, **caractérisé en ce que** l'une des pièces de contact à fiche supplémentaires (B) est un élément de mise à la terre (10) qui est encastré par moulage dans la partie de fond (2) de façon à présenter une surface de contact libre (13) dégagée par rapport à la paroi de fond moulée de la partie de fond, cette surface de contact libre établissant une liaison conductrice avec le carter du moteur électrique lors de la mise en place du boîtier de connexion (1) sur celui-ci.

5. Boîtier de connexion selon l'une des revendications précédentes, **caractérisé en ce que** dans la paroi de fond de la partie de fond (2) est encastré par moulage, un élément de sonde de température (14), d'une part de façon à présenter une surface de contact libre (17) dégagée par rapport à la paroi de fond moulée et entrant en contact avec le carter du moteur électrique lors de la mise en place du boîtier de connexion (1) sur celui-ci, et d'autre part de façon à s'étendre à l'intéieur de la partie de fond (2).

6. Boîtier de connexion selon la revendication 5, **caractérisé en ce que** le tronçon (19) de l'élément de sonde de température (14), qui s'étend à l'intérieur de la partie de fond (2), est sensiblement encastré dans une nervure de support (21) venue de moulage.

7. Boîtier de connnexion selon l'une des revendications 1 à 4, **caractérisé en ce que** toutes les pièces de contact à fiches (A, B) de chaque zone enfichable, qui font saillie de la partie de fond vers l'extérieur, forment respecttivement un groupe, et **en ce que** chacun des deux groupes est entouré par un manchon de protection (9, 23) venu de moulage.

8. Boîtier de connexion selon l'une des revendications précédentes, **caractérisé en ce que** les extrémités intérieures (24, 25, 20) de toutes les pièces de contact à fiche (A, B) conduisant le courant et de l'élément de sonde de température (14) sont prévues dans un plan et sont d'une configuration enfichable, **en ce qu'**il est prévu une plaque de circuit imprimé (3) sur laquelle sont disposés les composants de commande électriques (5) et laquelle présente des trous (26, 27) pur recevoir lesdites extrémités enfichables, et **en ce que** les extrémités de toutes les pièces de contact à fiches (A, B) encastrées par moulage, qui sont engagées dans lesdits trous, sont reliées électriquement à la plaque de circuit imprimé (3).

9. Boîtier de connexion selon l'une des revendications 1 à 7, **caractérisé en ce que** lex extrémités intérieures (24, 25, 20) de toutes les pièces de contact à fiche (A, B) conduisant le courant et de l'élément de sonde de temperature (14) sont prévues dans un plan et sont d'une configuration enfichable, **en ce qu'**il est prévu une plaque de circuit imprimé (3) sur laquelle sont disposés les composants de commande électriques (5) et laquelle présente des trous (26, 27) pour recevoir lesdites extrémités enfichables, et **en ce que** les extrémités de toutes les pièces de contact à fiche (A, B) encastrées par moulage, qui sont engagées dans lesdits trous, et tous les composants de commande électriques (5) de la plaque de circuit imprimé (3), sont reliés à cette dernière par une seule opération de liaison électrique.
